# EUROPEAN PATENT APPLICATION

(11) **EP 4 694 364 A1**
(43) Date of publication of application: **11.02.2026**
(21) Application number: 23931456.0
(22) Date of filing: 06.04.2023
(51) Int. Cl.: H04W 52/02

(54) **COMMUNICATION METHOD AND APPARATUS IN CELL DISCONTINUOUS TRANSMISSION/RECEPTION SCENARIO**

(71) Applicant: FUJITSU LIMITED, Kawasaki-shi Kanagawa 211-8588 (JP)
(72) Inventor: JIA, Meiyi, Beijing 100022 (CN); ZHU, Jing, Beijing 100022 (CN)
(74) Representative: Haseltine Lake Kempner LLP
(86) International application number: PCT/CN2023/086746
(87) International publication number: WO 2024/207388

(57) **Abstract**

Embodiments of the present disclosure provide a communication method and apparatus in a cell discontinuous transmission/reception scenario, the method comprising: when a network is in a network energy saving mode, a terminal equipment does not trigger a scheduling request (SR) and/or perform behaviors related to the network energy saving mode for a pending scheduling request (SR). According to the embodiments of the present disclosure, when the network is in a network energy saving mode, the terminal equipment does not trigger an SR, thereby a pending SR can be avoided from triggering a random access procedure, thus reducing network energy consumption. On the other hand, when the network is in a network energy saving mode, for the pending SR, the terminal equipment performs behaviors related to the network energy saving mode, thereby the pending SR will not make a terminal to release uplink configuration.

## Description

### FIELD

Embodiments of the present disclosure relate to the technical field of communications.

### BACKGROUND

As an important constituent part of global new-type infrastructure construction, a 5G (5th Generation Mobile Communication Technology) communication network has achieved rapid development worldwide in recent years. Network scale is getting larger and larger, and the energy consumption of operators is continuously increasing. By taking the data released by the Ministry of Industry and Information Technology of China as an example, the energy consumption in 2022 will increase by about 80% compared with that in 2015.

With the construction of 5G and large-scale commercialization of a 5G Active Antenna Unit (AAU), compared with Remote Radio Unit (RRU) mainly used in 3G and 4G, since power consumption of the AAU is relatively large, its energy consumption will also increase in multiples. 5G defines three service types, i.e., Enhanced Mobile Broadband (eMBB), massive Machine Type of Communication (mMTC) and Ultra Reliable Low Latency Communication (URLLC), resulting in a continuous increase in the number of 5G small packet sudden services, with base stations working non-stop for 24 hours, average daily energy consumption of a 5G station will also be more than twice that of a 4G station.

3GPP (3rd Generation Partnership Project) introduces key technologies such as Massive MIMO and a larger radio frequency bandwidth in the 5G era. 5G supports higher data rates and greater data traffic, more transmission bandwidths are required. Deployment of a high-frequency band will also be a main frequency band for future expansion of 5G. However, high-frequency band transmission characteristics limit a coverage range of a station, thus making deployment of 5G station denser. Moreover, energy consumption brought about by the station increase will impose huge operational cost pressure on operators. Thus, network energy saving has important significance for saving operating costs, 5G network energy saving is an urgent problem to be solved.

To achieve energy saving, a network device may carry out energy-saving processing respectively in the aspects of e.g. time domain, frequency domain, spatial domain and/or energy domain, according to a network load situation. For example, in the aspects of spatial and energy domains, the network device may turn off some antennas when a load is lower, so as to achieve the purpose of energy saving. In the aspect of time domain, the network device may introduce a cell-level discontinuous transmission/reception technology, enabling the network device not to transmit and/or receive signals during certain dormant periods, so as to achieve the purpose of energy saving.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that for a connected mode user equipment (UE), during an inactive state of cell discontinuous transmission/reception (cell DTX/DRX), at least not transmitting/receiving the following candidate channels/signals is taken into account:
Downlink:
   a periodic/semi-persistent CSI-RS (Channel State Information-Reference Signal) (including a TRS (Tracking RS));
   a PRS (Positioning Reference Signal);
   a PDCCH (Physical Downlink Control Channel) scrambled by a UE-specific RNTI (Radio Network Temporary Identity);
   a PDCCH in Type-3 CSS (common search space);
   an SPS (Semi-Persistent Scheduling) PDCCH;
Uplink:
   an SR (Scheduling Request);
   a periodic/semi-persistent CSI (Channel State Information) report (CSI report);
   a periodic/semi-persistent SRS (Sounding Reference Signal);
   a CG (Configured Grant)-PUSCH (Physical Uplink Shared Channel).

That is to say, for connected mode UEs, during an inactive state of cell DTX/DRX, the UEs do not transmit an SR. This will interrupt a process of needing to trigger the SR to request an uplink resource and transmission of a triggered pending SR, thereby causing problems.

For the above problems, the embodiments of the present disclosure provide a communication method and apparatus in a cell discontinuous transmission/reception scenario.

According to an aspect of the embodiments of the present disclosure, a communication apparatus is provided, configured in a terminal equipment, the apparatus comprising:
a processing unit configured to, when a network is in a network energy saving mode, not to trigger a scheduling request (SR) and/or perform behaviors related to the network energy saving mode for a pending scheduling request.

In some embodiments, the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

In some embodiments, the scheduling request includes at least one of the following:
a scheduling request for buffer status report (BSR);
a scheduling request for beam failure recovery (BFR);
a scheduling request for consistent LBT failure recovery;
a scheduling request related to integrated access and backhaul (IAB);
a scheduling request related to positioning; and
a scheduling request related to a non-terrestrial network (NTN).

In some embodiments, the behavior related to the network energy saving mode includes at least one of the following:
canceling the pending scheduling request (SR);
considering that there exists no valid PUCCH resource configured for the pending SR;
considering that SR transmission is low-priority SR transmission;
pending an SR counter;
not initiating a random access procedure;
not performing clearing and/or releasing operation(s); and
using a larger maximum value of number of SR transmissions *(sr-TransMax).*

According to another aspect of the embodiments of the present disclosure, a communication apparatus is provided, configured in a network device, the apparatus comprising:
a first indicating unit configured to indicate information related to network energy saving to a terminal equipment.

One of advantageous effects of the embodiments of the present disclosure lies in: according to the embodiments of the present disclosure, when the network is in a network energy saving mode, the terminal equipment does not trigger an SR, thereby it can be avoided that a random access procedure is triggered by a pending SR, thus reducing network energy consumption. On the other hand, when the network is in a network energy saving mode, for the pending SR, the terminal equipment performs behaviors related to the network energy saving mode, thereby the pending SR will not make a terminal to release uplink configuration.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a communication system in the embodiments of the present disclosure;
FIG. 2 is a schematic diagram of carrying BFR information of a secondary cell by using a legacy BFR MAC CE;
FIG. 3 is a schematic diagram of carrying BFR information of a secondary cell by using an enhanced BFR MAC CE;
FIG. 4 is a schematic diagram of a communication method in the embodiments of the present disclosure;
FIG. 5 is another schematic diagram of a communication method in the embodiments of the present disclosure;
FIG. 6 is a schematic diagram of a communication apparatus in the embodiments of the present disclosure;
FIG. 7 is another schematic diagram of a communication apparatus in the embodiments of the present disclosure;
FIG. 8 is a schematic diagram of a terminal equipment in the embodiments of the present disclosure;
FIG. 9 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), Integrated Access and Backhaul (IAB) node or IAB-DU or IAB-donor. And the term "base station" may include some or all functions of a base station, each base station may provide communication coverage to a specific geographic region. The term "cell" may refer to a base station and/or its coverage area, which depends on the context in which this term is used. In a case where there is no confusion, the terms "cell" and " base station" are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT, a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited to these.

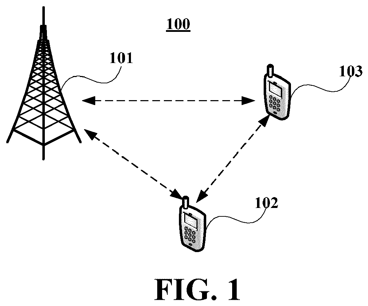

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the following description, without causing confusion, "if...", "in a case where..." and "when..." may be used interchangeably.

In the embodiments of the present disclosure, the scheduling request is used for requesting UL-SCH (Uplink Shared Channel) resources for new transmissions.

A MAC (Media Access Control) entity may be configured with zero, one or more SR configurations. An SR configuration consists of a set of PUCCH (Physical Uplink Control Channel) resources for SR across different BWPs (Bandwidth Parts) and cells. For a logical channel or for SCell (secondary cell) beam failure recovery and for consistent LBT (listen before talk) failure recovery, at most one PUCCH resource for SR is configured per BWP. For a logical channel serving a radio bearer configured with SDT (Small Data Transfer), PUCCH resource for SR is not configured for SDT. For beam failure recovery of BFD-RS (Beam Failure Detection-Reference Signal) set(s) of Serving cell, up to two PUCCH resources for SR are configured per BWP. For positioning measurement gap activation/deactivation request, a dedicated SR configuration is configured.

Each SR configuration corresponds to one or more logical channels and/or to SCell beam failure recovery and/or to consistent LBT failure recovery and/or to beam failure recovery of a BFD-RS set and/or to positioning measurement gap activation/deactivation requests. Each logical channel, SCell beam failure recovery, beam failure recovery of a BFD-RS set and consistent LBT failure recovery, may be mapped to zero or one SR configuration, which is configured by RRC (Radio Resource Control). The SR configuration of the logical channel that triggered a BSR (Buffer Status Report), or the SCell beam failure recovery or the beam failure recovery of a BFD-RS set or the consistent LBT failure recovery (if such a configuration exists) or positioning measurement gap activation/deactivation request is considered as corresponding SR configuration for the triggered SR. Any SR configuration may be used for an SR triggered by a pre-emptive BSR or Timing Advance reporting.

RRC configures the following parameters for a scheduling request procedure:
- *sr-ProhibitTimer* (per SR configuration);
- *sr-TransMax* (per SR configuration).

The following UE variables are used for the scheduling request procedure:
- *SR_COUNTER* (per SR configuration).

If an SR is triggered and there are no other SRs pending corresponding to the same SR configuration, the MAC entity shall set the *SR_COUNTER* of the corresponding SR configuration to 0.

When an SR is triggered, it shall be considered as pending until it is cancelled.

All pending SR(s) for BSR triggered according to the BSR procedure prior to the MAC PDU (Protocol Data Unit) assembly shall be cancelled and each respective sr-*ProhibitTimer* (SR prohibit timer) shall be stopped when the MAC PDU is transmitted and this PDU includes a long or short BSR MAC CE (Control Element) which contains buffer status up to (and including) the last event that triggered a BSR prior to the MAC PDU assembly. All pending SR(s) for BSR triggered according to the BSR procedure shall be cancelled and each respective *sr-ProhibitTimer* shall be stopped when the UL (Uplink, called "UL" for short) grant(s) can accommodate all pending data available for transmission.

The MAC entity shall for each pending SR not triggered according to the BSR procedure for a serving cell:
1> if this SR was triggered by Pre-emptive BSR procedure prior to the MAC PDU assembly and a MAC PDU containing the relevant Pre-emptive BSR-MAC CE is transmitted; or
1> if this SR was triggered by beam failure recovery of a SCell and a MAC PDU is transmitted and this PDU includes a MAC CE for BFR (Beam Failure Recovery) which contains beam failure recovery information for this SCell; or
1> if this SR was triggered by beam failure recovery for a BFD-RS set of a serving cell and a MAC PDU is transmitted and this PDU includes an enhanced BFR MAC CE or a truncated enhanced BFR MAC CE which contains beam failure recovery information for this BFD-RS set of the serving cell; or
1> if this SR was triggered by beam failure recovery of an SCell and this SCell is deactivated; or
1> if this SR was triggered by beam failure recovery for a BFD-RS set of an SCell and this SCell is deactivated; or
1> if this SR was triggered by a positioning measurement gap activation / deactivation request and the positioning measurement gap activation / deactivation request MAC CE that triggers the SR has already been cancelled; or
1> if this SR was triggered by consistent LBT failure recovery of an SCell and a MAC PDU is transmitted and the MAC PDU includes an LBT failure MAC CE that indicates consistent LBT failure for this SCell; or
1> if this SR was triggered by consistent LBT failure recovery of an SCell and all the triggered consistent LBT failure(s) for this SCell are cancelled; or
1> if this SR was triggered by Timing Advance reporting and all the triggered Timing Advance reports are cancelled:
   2> cancel the pending SRs and stop the corresponding *sr-ProhibitTimer,* if running.

Only PUCCH resources on a BWP which is active at the time of SR transmission occasion are considered valid.

As long as at least one SR is pending, the MAC entity shall for each pending SR:
1> if the MAC entity has no valid PUCCH resource configured for the pending SR:
   2> initiate a random access procedure on a SpCell (special cell) and cancel the pending SR.
1> else, for SR configuration corresponding to the pending SR:
   2> when the MAC entity has an SR transmission occasion on the valid PUCCH resource configured for the SR; and
   2> if *sr-ProhibitTimer* is not running at the time of the SR transmission occasion; and
   2> if the PUCCH resource for the SR transmission occasion does not overlap with a measurement gap:
      3> if the PUCCH resource for the SR transmission occasion overlaps with neither a UL-SCH (Uplink Shared Channel) resource (an UL-SCH resource whose simultaneous transmission with the SR is not allowed by configuration of *simultaneousPUCCH-PUSCH* or *simultaneousPUCCH-PUSCH-SecondaryPUCCHgroup* or *simultaneousSR-PUSCH-diffPUCCH-Groups* nor an SL-SCH (Sidelink Shared Channel) resource; or
      3> if the MAC entity is able to perform this SR transmission simultaneously with the transmission of the SL-SCH resource; or
      3> if the MAC entity is configured with *Ich-basedPrioritization,* and the PUCCH resource for the SR transmission occasion does not overlap with the PUSCH duration of an uplink grant received in a random access response or with the PUSCH duration of an uplink grant addressed to a temporary C-RNTI (Cell Radio Network Temporary Identifier) or with the PUSCH duration of a MSGA (message A) payload, and the PUCCH resource for the SR transmission occasion for the triggered pending SR overlaps with any other UL-SCH resource(s), and the physical layer can signal the SR on one valid PUCCH resource for SR, and the priority of the logical channel that triggers the SR is higher than the priory of the uplink grant(s) for any UL-SCH resource(s) where the uplink grant was not ready de-prioritized and its simultaneous transmission with the SR is not allowed by configuration of *simultaneousPUCCH-PUSCH* or *simultaneousPUCCH-PUSCH-SecondaryPUCCHgroup* or *simultaneousSR-PUSCH-diffPUCCHgroups,* and the priority of the uplink grant is determined; or
      3> if both *sl-PrioritizationThres* and *ul-PrioritizationThres* are configured and the PUCCH resource for the SR transmission occasion for the triggered pending SR overlaps with any UL-SCH resource(s) carrying a MAC PDU, and the value of the priority of the determined triggered SR is lower than *sl-PrioritizationThres,* and the value of the highest priority of the logical channel(s) in the MAC PDU is higher than or equal to *ul-PrioritizationThres,* and any MAC CE that is prioritized is not included in the MAC PDU and the MAC PDU is not prioritized by upper layer; or
      3> if an SL-SCH resource overlaps with the PUCCH resource for the SR transmission occasion for the triggered pending SR, and the MAC entity is not able to perform this SR transmission simultaneously with the transmission of the SL-SCH resource, and either transmission on the SL-SCH resource is not prioritized or the priority value of the logical channel that triggers SR is lower than *ul-PrioritizationThres* (if configured); or
      3> if an SL-SCH resource overlaps with the PUCCH resource for the SR transmission occasion for the triggered pending SR, and the MAC entity is not able to perform this SR transmission simultaneously with the transmission of the SL-SCH resource, and the priority of the determined triggered SR is higher than the priority of the determined MAC PDU for the SL-SCH resource:
         4> consider the SR transmission as a prioritized SR transmission.
         4> consider the other overlapping uplink grant(s) (if any) as a de-prioritized uplink grant(s), except for the overlapping uplink grant(s) whose simultaneous transmission is allowed by configuration of *simultaneousPUCCH-PUSCH* or *simultaneousPUCCH-PUSCH-SecondaryPUCCHgroup* or *simultaneousSR-PUSCH-diffPUCCH-Groups;*
         4> if the de-prioritized uplink grant(s) is a configured uplink grant configured with *autonomousTx* (whose PUSCH has already started):
            5> stop the *configuredGrantTimer* for the corresponding HARQ process of the de-prioritized uplink grant(s);
            5> stop the *cg-RetransmissionTimer* for the corresponding HARQ process of the de-prioritized uplink grant(s).
         4> if *SR*_*COUNTER < sr-TransMax:*
            5> instruct the physical layer to signal the SR on one valid PUCCH resource for SR;
            5> if LBT failure indication is not received from lower layers:
               6> increment *SR_COUNTER* by 1;
               6> start the *sr-ProhibitTimer.*
            5> else, if *lbt-FailureRecoveryConfig* is not configured:
               6> increment *SR_COUNTER* by 1.
         4> else:
            5> notify RRC to release PUCCH for all serving cells;
            5> notify RRC to release SRS for all serving cells;
            5> clear any configured downlink assignments and uplink grants;
            5> clear any PUSCH resources for semi-persistent CSI reporting;
            5> initiate a random access procedure on the SpCell and cancel all pending SRs.
      3> else:
         4> consider the SR transmission as a de-prioritized SR transmission.

NOTE 1: Except for SR for SCell beam failure recovery, the selection of which valid PUCCH resource for SR to signal SR on when the MAC entity has more than one overlapping valid PUCCH resource for the SR transmission is left to UE implementation.
NOTE 2: If more than one individual SR triggers an instruction from the MAC entity to the PHY layer to signal the SR on the same valid PUCCH resource, the *SR_COUNTER* for the relevant SR configuration is incremented only once.
NOTE 3: When the MAC entity has pending SR for SCell beam failure recovery and the MAC entity has one or more PUCCH resources (other than PUCCH resources of pending SR for beam failure recovery of a BFD-RS set) overlapping with PUCCH resource for SCell beam failure recovery for the SR transmission occasion, the MAC entity considers only the PUCCH resource for SCell beam failure recovery as valid. When the MAC entity has pending SR for beam failure recovery of a BFD-RS set of serving cell and the MAC entity has one or more PUCCH resource(s) (other than PUCCH resource of pending SR for beam failure recovery) overlapping with PUCCH resource for beam failure recovery of that BFD-RS set for the SR transmission occasion, the MAC entity considers only the PUCCH resource for beam failure recovery of that BFD-RS set as valid.
NOTE 4: For a UE operating in a semi-static channel access mode, PUCCH resource overlapping with the set of consecutive symbols where the UE does not transmit before the start of a next channel occupancy time are not considered valid.
NOTE 5: If the MAC entity is configured with *lch-basedPrioritization,* the MAC entity does not take UCI multiplexing into account when determining whether the valid PUCCH resource for the SR transmission can be signalled by the physical layer and the SR transmission occasion overlaps with the PUSCH duration of an uplink grant of a MSGA load.
NOTE 6: When the MAC entity has PUCCH resource for pending SR for SCell beam failure recovery overlapping with PUCCH resource for pending SR for beam failure recovery of a BFD-RS set for the SR transmission occasion, it is up to UE implementation to select PUCCH resource for SCell beam failure recovery or PUCCH resource for beam failure recovery of a BFD-RS set.

In the BSR procedure, the MAC entity shall:
1> if the Buffer Status reporting procedure determines that at least one BSR has been triggered and not cancelled:
   2> if UL-SCH resources are available for a new transmission and the UL-SCH resources can accommodate the BSR MAC CE plus its subheader as a result of logical channel prioritization;
      3> instruct the Multiplexing and Assembly procedure to generate the BSR MAC CE(s);
      3> start or restart *periodicBSR-Timer* except when all the generated BSRs are long or short Truncated or Extended long or short Truncated BSRs;
      3> start or restart *retxBSR-Timer.*
   2> if a Regular BSR has been triggered and *logicalChannelSR-DelayTimer* is not running;
      3> if there is no UL-SCH resource available for a new transmission; or
      3> if the MAC entity is configured with configured uplink grant(s) and the Regular BSR was triggered for a logical channel for which *logicalChannelSR-Mask* is set to *false;* or
      3> if the UL-SCH resources available for a new transmission do not meet the LCP (Logical Channel Prioritization) mapping restrictions configured for the logical channel that triggered the BSR;
         4> trigger a scheduling request.
Note 2: UL-SCH resources are considered available if the MAC entity has been configured with, or receives, or determines an uplink grant. If the MAC entity has determined at a given point in time that UL-SCH resources are available, this need not imply that UL-SCH resources are available for use at that point in time.

In the BFR procedure, the MAC entity shall:
1> if the Beam Failure Recovery procedure determines that at least one BFR has been triggered and not cancelled for an SCell for which evaluation of the candidate beams according to the requirements has been completed, and if none of the serving cell(s) of this MAC entity are configured with two BFD-RS sets:
   2> if UL-SCH resources are available for a new transmission and if the UL-SCH resources can accommodate the BFR MAC CE plus its subheader as a result of LCP:
      3> instruct the Multiplexing and Assembly procedure to generate the BFR MAC CE;
   2> else if UL-SCH resources are available for a new transmission and if the UL-SCH resources can accommodate the Truncated BFR MAC CE plus its subheader as a result of LCP:
      3> instruct the Multiplexing and Assembly procedure to generate the Truncated BFR MAC CE;
   2> else:
      3> trigger the SR for SCell beam failure recovery for each SCell for which BFR has been triggered and not cancelled, and for which evaluation of the candidate beams according to the requirements has been completed.
1> if the Beam Failure Recovery procedure determines that at least one BFR for any BFD-RS set has been triggered and not cancelled for an SCell for which evaluation of the candidate beams according to the requirements has been completed; or
1> if the Beam Failure Recovery procedure determines that at least one BFR for only one BFD-RS set has been triggered and not cancelled for an SpCell for which evaluation of the candidate beams according to the requirements has been completed; or
1> if the Beam Failure Recovery procedure determines that at least one BFR has been triggered and not cancelled for an SCell for which evaluation of the candidate beams according to the requirements has been completed and if at least one serving cell of this MAC entity is configured with two BFD-RS sets:
   2> if UL-SCH resources are available for a new transmission and if the UL-SCH resources can accommodate the Enhanced BFR MAC CE plus its subheader as a result of LCP:
      3> instruct the Multiplexing and Assembly procedure to generate the Enhanced BFR MAC CE;
   2> else if UL-SCH resources are available for a new transmission and if the UL-SCH resources can accommodate the Truncated Enhanced BFR MAC CE plus its subheader as a result of LCP:
      3> instruct the Multiplexing and Assembly procedure to generate the Truncated Enhanced BFR MAC CE.
   2> else:
      3> trigger the SR for beam failure recovery of each BFD-RS set for which BFR has been triggered, not cancelled, and for which evaluation of the candidate beams according to the requirements has been completed;
      3> trigger the SR for SCell beam failure recovery for each SCell for which BFR has been triggered, not cancelled, and for which evaluation of the candidate beams according to the requirements has been completed.

The MAC entity may be configured by RRC per Serving Cell the beam failure recovery procedure which is used for indicating to the serving gNB of a new SSB or CSI-RS when beam failure is detected on the serving SSB(s)/CSI-RS(s). In Rel-15 and Rel-16, cell-level beam failure detection is supported. The MAC entity shall:
if the beam failure recovery procedure determines that at least one BFR has been triggered, and is not cancelled:
if UL-SCH resources are available for a new transmission and if the UL-SCH resources can accommodate the BFR MAC CE plus its subheader as a result of LCP, instruct the Multiplexing and Assembly procedure to generate the BFR MAC CE.
Else if UL-SCH resources are available for a new transmission and if the UL-SCH resources can accommodate the Truncated BFR MAC CE plus its subheader as a result of LCP, instruct the Multiplexing and Assembly procedure to generate the Truncated BFR MAC CE.
Else trigger the SR for secondary cell beam failure recovery of each secondary cell that triggers the BFR and whose BFR is not cancelled.

Under the R17 multi-TRP operation, beam failure detection for a separate BFD-RS (Beam Failure Detection Reference Signal) group per-TRP is supported, and simultaneous configuration of cell-specific BFR and TRP-specific BFR on different CCs (Component Carriers) is supported, but simultaneous configuration of TRP-specific BFR and Rel-15/16 BFR (i.e., *BeamFailureRecoveryConfig* / *BeamFailureRecoverySCellConfig-r16*) on one CC is not supported.

According to the agreement reached at the last meeting of RAN 2 (Radio Access Network Working Group), that is, a legacy BFR MAC CE and an enhanced BFR MAC CE are not triggered at the same time, if at least one cell is configured with two BFD-RS sets, the enhanced BFR MAC CE is used for BFR of a servicing cell configured with or without a BFD-RS set.

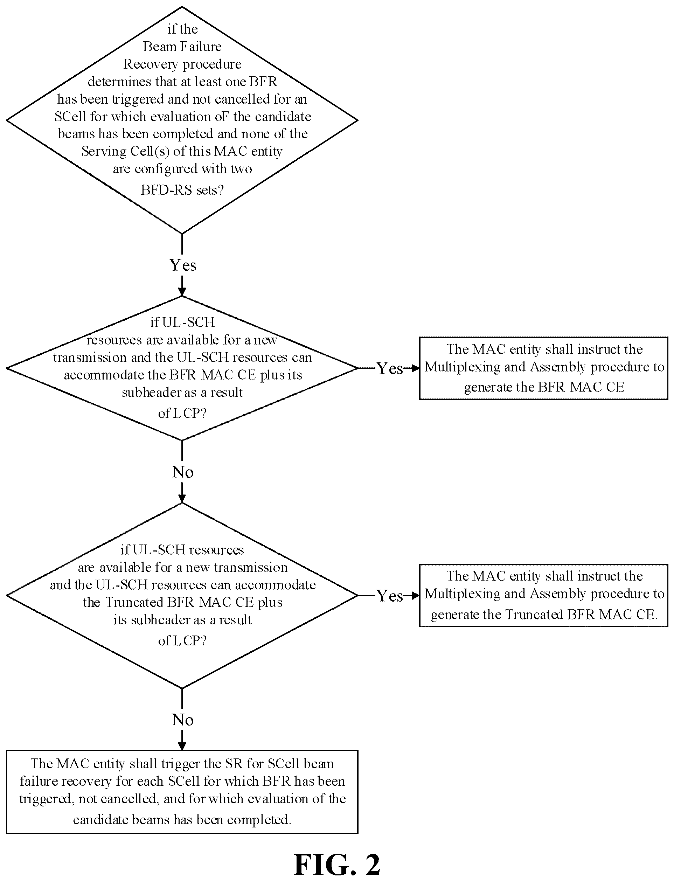

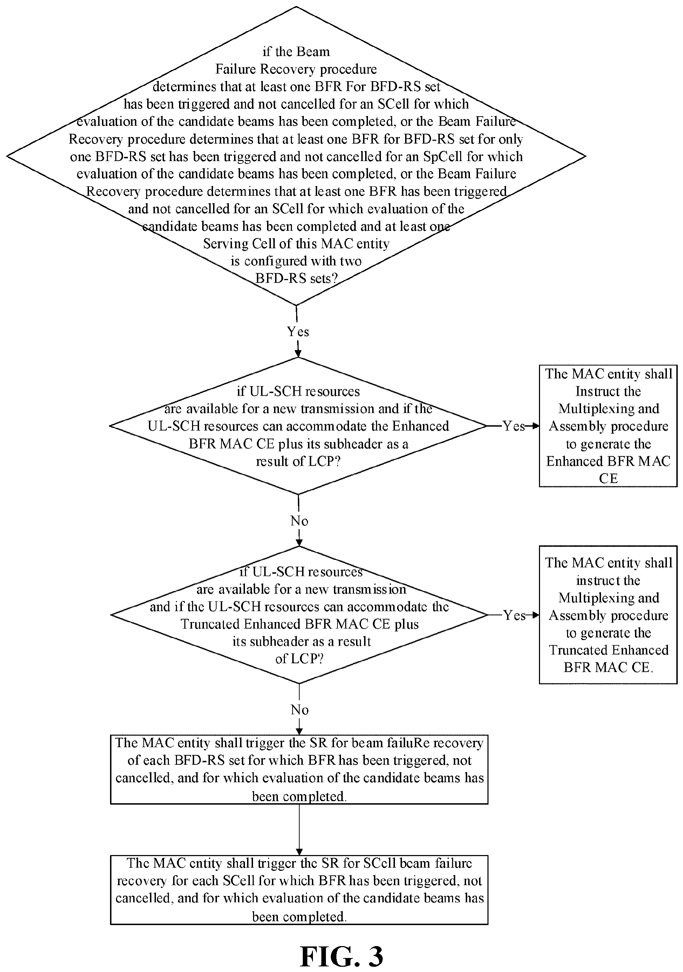

According to the above agreement, a BFR procedure described in a current protocol is shown in FIGS. 2 and 3.

As shown in FIG. 2, the MAC entity shall:
1> if the Beam Failure Recovery procedure determines that at least one BFR has been triggered and not cancelled for a secondary cell for which evaluation of the candidate beams has been completed and none of the serving cell(s) of this MAC entity are configured with two BFD-RS sets:
   2> if UL-SCH resources are available for a new transmission and the UL-SCH resources can accommodate the BFR MAC CE plus its subheader as a result of LCP:
      3> instruct the Multiplexing and Assembly procedure to generate the BFR MAC CE.
   2> else if UL-SCH resources are available for a new transmission and the UL-SCH resources can accommodate the Truncated BFR MAC CE plus its subheader as a result of LCP:
      3> instruct the Multiplexing and Assembly procedure to generate the Truncated BFR MAC CE.
   2> else:
      3> trigger the SR for secondary cell beam failure recovery for each secondary cell for which BFR has been triggered, not cancelled, and for which evaluation of the candidate beams has been completed.

Moreover, as shown in FIG. 3, the MAC entity shall:
1> if the Beam Failure Recovery procedure determines that at least one BFR for BFD-RS set has been triggered and not cancelled for a secondary cell for which evaluation of the candidate beams has been completed; or
1> if the Beam Failure Recovery procedure determines that at least one BFR for BFD-RS set for only one BFD-RS set has been triggered and not cancelled for a special cell for which evaluation of the candidate beams has been completed; or
1> if the Beam Failure Recovery procedure determines that at least one BFR has been triggered and not cancelled for a secondary cell for which evaluation of the candidate beams has been completed, and if at least one serving cell of this MAC entity is configured with two BFD-RS sets:
   2> if UL-SCH resources are available for a new transmission and if the UL-SCH resources can accommodate the Enhanced BFR MAC CE plus its subheader as a result of LCP:
      3> instruct the Multiplexing and Assembly procedure to generate the Enhanced BFR MAC CE.
   2> else if UL-SCH resources are available for a new transmission and if the UL-SCH resources can accommodate the Truncated Enhanced BFR MAC CE plus its subheader as a result of LCP:
      3> instruct the Multiplexing and Assembly procedure to generate the Truncated Enhanced BFR MAC CE.
   2> else:
      3> trigger the SR for beam failure recovery of each BFD-RS set for which BFR has been triggered, not cancelled, and for which evaluation of the candidate beams has been completed;
      3> trigger the SR for secondary cell beam failure recovery for each secondary cell for which BFR has been triggered, not cancelled, and for which evaluation of the candidate beams has been completed.

In the LBT failure detection and recovery process, the MAC entity shall:
1> if consistent LBT failure has been triggered, and not cancelled in the SpCell; and
1> if UL-SCH resources are available for a new transmission in the SpCell and these UL-SCH resources can accommodate the LBT failure MAC CE plus its subheader as a result of logical channel prioritization,
   2> instruct the Multiplexing and Assembly procedure to generate the LBT failure MAC CE.
1> else if consistent LBT failure has been triggered, and not cancelled in at least one SCell:
   2> if UL-SCH resources are available for a new transmission in a serving cell for which consistent LBT failure has not been triggered and these UL-SCH resources can accommodate the LBT failure MAC CE plus its subheader as a result of logical channel prioritization,
      3> instruct the Multiplexing and Assembly procedure to generate the LBT failure MAC CE.
   2> else:
      3> trigger a scheduling request for LBT failure MAC CE.

Embodiments of the present disclosure are described below in conjunction with the drawings and the specific implementations.

### Embodiments of a first aspect

Embodiments of the present disclosure provide a communication method in cell discontinuous transmission/reception scenarios, which will be described from a terminal equipment side.

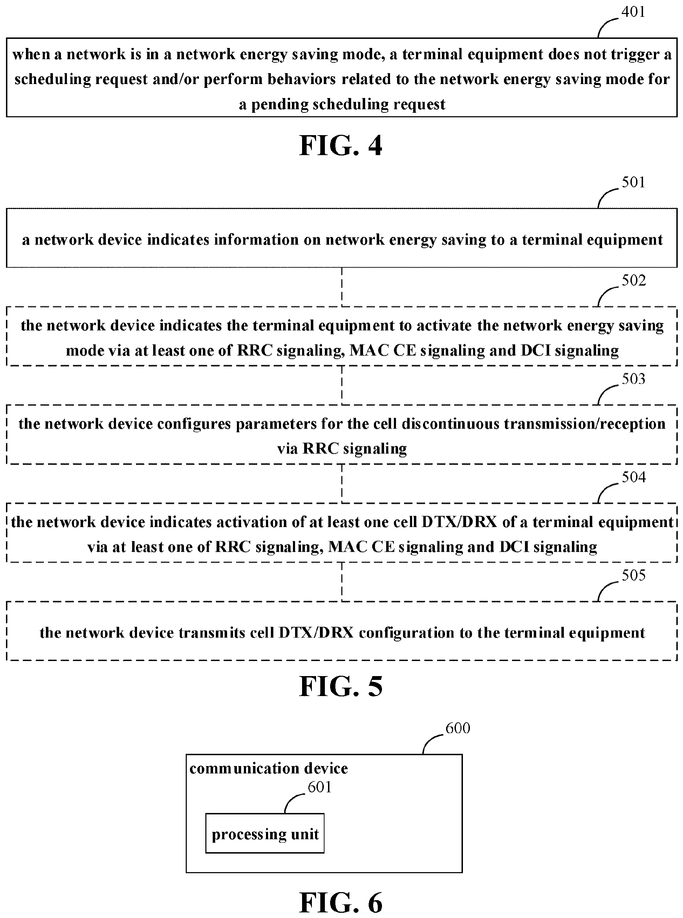

FIG. 4 is a schematic diagram of a communication method in the embodiments of the present disclosure. As shown in FIG. 4, the method includes:
401: when a network is in a network energy saving mode, a terminal equipment does not trigger a scheduling request and/or perform behaviors related to the network energy saving mode for a pending scheduling request.

It should be noted that the above FIG. 4 only schematically describes the embodiments of the present disclosure, but the present disclosure is not limited to this. For example, other some operations can be increased or operations therein may be reduced. Persons skilled in the art may make appropriate modifications according to the above contents, not limited to the records in the above FIG. 4.

According to the above embodiments, when the network is in a network energy saving mode, the terminal equipment does not trigger an SR, thereby a pending SR can be avoided from triggering a random access procedure, thus reducing network energy consumption. On the other hand, when the network is in a network energy saving mode, for the pending SR, the terminal equipment performs behaviors related to the network energy saving mode, thereby the pending SR will not make a terminal to release uplink configuration.

In some embodiments, the network energy saving mode refers to one of the following:
the network energy saving (NES) mode is activated;
cell discontinuous transmission/reception is configured and/or activated; and
a terminal equipment is in an inactive state of cell discontinuous transmission/reception.

In the above embodiments, that the network energy saving (NES) mode is activated, may be for example that a network device indicates the terminal equipment to activate the NES mode via at least one of RRC signaling (a broadcast or dedicated message), MAC CE signaling and DCI signaling. However, the present disclosure is not limited to this, the NES mode may be activated via other means.

In the above embodiments, that cell DTX/DRX is configured/activated, may be for example that a network device configures parameters for cell DTX/DRX via RRC signaling (a broadcast or dedicated message), such as period, on-duration time, etc.; may be for another example that the network device indicates activation of (at least one) cell DTX/DRX of the terminal equipment via at least one of RRC signaling (a broadcast or dedicated message), MAC CE signaling and DCI signaling; may be for a further example that the network device configures parameters for cell DTX/DRX via RRC signaling (a broadcast or dedicated message), and indicates activation of at least one cell DTX/DRX of the terminal equipment via at least one of RRC signaling (a broadcast or dedicated message), MAC CE signaling and DCI signaling. However, the present disclosure is not limited to this, cell DTX/DRX may further be configured and/or activated via other means.

In the above embodiments, that the terminal equipment is in inactive state of cell DTX/DRX, may be for example that according to cell DTX/DRX configuration, the terminal equipment enters dormant or inactive time, or the terminal equipment is not in an on-duration time of cell DTX/DRX; may be for another example that according to cell DTX/DRX configuration, when cell DTX/DRX is activated, the terminal equipment enters dormant or inactive time, or the terminal equipment is not in an on-duration time of cell DTX/DRX.

In the above embodiments, the "cell DTX/DRX configuration" for example may be that a network device configures parameters for cell DTX/DRX via RRC signaling (a broadcast or dedicated message), such as a period, an on-duration time, etc. However, the present disclosure is not limited thereto, there may further be other configuration methods.

In the above embodiments, the "cell DTX/DRX is activated" for example may be that a network device indicates activation of (at least one) cell DTX/DRX of a terminal equipment via at least one of RRC signaling (a broadcast or dedicated message), MAC CE signaling and DCI signaling. However, the present disclosure is not limited thereto, there may further be other activation methods.

In each of the above embodiments, the RRC signaling may be broadcast signaling, that is, a network device may perform the above indications/configurations/activations via broadcasting; the RRC signaling may further be dedicated signaling, that is, the network device may perform the above indications/configurations/activations for a certain terminal equipment or a certain cell, etc.

In some embodiments, the scheduling request includes at least one of the following:
a scheduling request for buffer status report (BSR);
a scheduling request for beam failure recovery (BFR);
a scheduling request for consistent LBT failure recovery;
a scheduling request related to integrated access and backhaul (IAB);
a scheduling request related to positioning; and
a scheduling request related to a non-terrestrial network (NTN).

In the above embodiments, the scheduling request for BSR e.g. is a pending SR triggered according to a BSR procedure.

The following table shows possible behaviors of the MAC entity in a case where the SR is triggered according to the BSR procedure:

| | | | |
|---|---|---|---|
| The MAC entity shall: | | | |
| | 1> if the Buffer Status reporting procedure determines that at least one BSR has been triggered and not cancelled: | | |
| | | 2> if UL-SCH resources are available for a new transmission and the UL-SCH resources can accommodate the BSR MAC CE plus its subheader as a result of logical channel prioritization: | |
| | | | 3> instruct the Multiplexing and Assembly procedure to generate the BSR MAC CE(s) as defined in clause 6.1.3.1; |
| | | | 3> start or restart *periodicBSR-Timer* except when all the generated BSRs are long or short Truncated or Extended long or short Truncated BSRs; |
| | | | 3> start or restart *retxBSR-Timer.* |
| | | 2> if a Regular BSR has been triggered and *logicalChannelSR-DelayTimer* is not running and | |
| | | **if NES mode is not activated:** | |
| | | 3> if there is no UL-SCH resource available for a new transmission; or | |
| | | 3> if the MAC entity is configured with configured uplink grant(s) and the Regular BSR was triggered for a logical channel for which *logicalChannelSR-Mask* is set to *false;* or | |
| | | 3> if the UL-SCH resources available for a new transmission do not meet the LCP mapping restrictions (see clause 5.4.3.1) configured for the logical channel that triggered the BSR: | |
| | | | 4> trigger a Scheduling Request. |

According to this embodiment, when the network is in a network energy saving mode, the terminal equipment does not trigger an SR for BSR. Thereby a pending SR may be avoided from triggering a random access procedure, thus reducing network energy consumption.

In the above embodiments, the scheduling request for BFR, for example is an SR triggered for a secondary cell BFR (SCell BFR), for another example is an SR triggered for a BFD-RS set BFR.

The following table shows possible behaviors of the MAC entity in a case where the SR is triggered by a SCell BFR:

| | | | |
|---|---|---|---|
| The MAC entity shall: | | | |
| | 1> if the Beam Failure Recovery procedure determines that at least one BFR has been triggered and not cancelled for an SCell for which evaluation of the candidate beams according to the requirements as specified in TS 38.133 [11] has been completed and if none of the Serving Cell(s) of this MAC entity are configured with two BFD-RS sets: | | |
| | | 2> if UL-SCH resources are available for a new transmission and if the UL-SCH resources can accommodate the BFR MAC CE plus its subheader as a result of LCP: 3> instruct the Multiplexing and Assembly procedure to generate the BFR MAC CE. | |
| | | 2> else if UL-SCH resources are available for a new transmission and if the UL-SCH resources can accommodate the Truncated BFR MAC CE plus its subheader as a result of LCP: | |
| | | | 3> instruct the Multiplexing and Assembly procedure to generate the Truncated BFR MAC CE. |
| | | 2> else: | |
| | | | 3> trigger the SR for SCell beam failure recovery for each SCell for which BFR has been triggered, not cancelled, **for which NES mode is not activated,** and for which evaluation of the candidate beams according to the requirements as specified in TS 38.133 [11] has been completed. |
| | 1> if the Beam Failure Recovery procedure determines that at least one BFR for any BFD-RS set has been triggered and not cancelled for an SCell for which evaluation of the candidate beams according to the requirements as specified in TS 38.133 [11] has been completed; or | | |
| | 1> if the Beam Failure Recovery procedure determines that at least one BFR for only one BFD-RS set has been triggered and not cancelled for an SpCell for which evaluation of the candidate beams according to the requirements as specified in TS 38.133 [11] has been completed; or | | |
| | 1> if the Beam Failure Recovery procedure determines that at least one BFR has been triggered and not cancelled for an SCell for which evaluation of the candidate beams according to the | | |
| | | requirements as specified in TS 38.133 [11] has been completed and if at least one Serving Cell of this MAC entity is configured with two BFD-RS sets: | |
| | | 2> if UL-SCH resources are available for a new transmission and if the UL-SCH resources can accommodate the Enhanced BFR MAC CE plus its subheader as a result of LCP: | |
| | | | 3> instruct the Multiplexing and Assembly procedure to generate the Enhanced BFR MAC CE. |
| | | 2> else if UL-SCH resources are available for a new transmission and if the UL-SCH resources can accommodate the Truncated Enhanced BFR MAC CE plus its subheader as a result of LCP: | |
| | | | 3> instruct the Multiplexing and Assembly procedure to generate the Truncated Enhanced BFR MAC CE. |
| | | 2> else: | |
| | | | 3> trigger the SR for beam failure recovery of each BFD-RS set for which BFR has been triggered, not cancelled, and for which evaluation of the candidate beams according to the requirements as specified in TS 38.133 [11] has been completed; |
| | | | 3> trigger the SR for SCell beam failure recovery for each SCell for which BFR has been triggered, not cancelled, **for which NES mode is not activated,** and for which evaluation of the candidate beams according to the requirements as specified in TS 38.133 [11] has been completed. |

The following table shows possible behaviors of the MAC entity in a case where the SR is triggered by a BFD-RS set BFR:

| | | |
|---|---|---|
| 1> if the Beam Failure Recovery procedure determines that at least one BFR for any BFD-RS set has been triggered and not cancelled for an SCell for which evaluation of the candidate beams according to the requirements as specified in TS 38.133 [11] has been completed; or | | |
| 1> if the Beam Failure Recovery procedure determines that at least one BFR for only one BFD-RS set has been triggered and not cancelled for an SpCell for which evaluation of the candidate beams according to the requirements as specified in TS 38.133 [11] has been completed; or | | |
| 1> if the Beam Failure Recovery procedure determines that at least one BFR has been triggered and not cancelled for an SCell for which evaluation of the candidate beams according to the requirements as specified in TS 38.133 [11] has been completed and if at least one Serving Cell of this MAC entity is configured with two BFD-RS sets: | | |
| | 2> if UL-SCH resources are available for a new transmission and if the UL-SCH resources can accommodate the Enhanced BFR MAC CE plus its subheader as a result of LCP: | |
| | | 3> instruct the Multiplexing and Assembly procedure to generate the Enhanced BFR MAC CE. |
| | 2> else if UL-SCH resources are available for a new transmission and if the UL-SCH resources can accommodate the Truncated Enhanced BFR MAC CE plus its subheader as a result of LCP: | |
| | | 3> instruct the Multiplexing and Assembly procedure to generate the Truncated Enhanced BFR MAC CE. |
| | 2> else: | |
| | | 3> trigger the SR for beam failure recovery of each BFD-RS set for which BFR has been triggered, not cancelled, **for which NES mode is not activated,** and for which |
| | | evaluation of the candidate beams according to the requirements as specified in TS 38.133 [11] has been completed; |
| | | 3> trigger the SR for SCell beam failure recovery for each SCell for which BFR has been triggered, not cancelled, and for which evaluation of the candidate beams according to the requirements as specified in TS 38.133 [11] has been completed. |

According to this embodiment, when the network is in a network energy saving mode, an SR for BSR, such as an SR triggered by a SCell BFR and/or an SR triggered by BFD-RS in combination with the BFR, is not triggered. Thereby a pending SR may be avoided from triggering a random access procedure, thus reducing network energy consumption.

In the above embodiments, a scheduling request for consistent LBT failure recovery is for example an SR triggered for consistent LBT failure recovery.

The following table shows possible behaviors of the MAC entity in this example:

| | | | |
|---|---|---|---|
| The MAC entity shall: | | | |
| | 1> if consistent LBT failure has been triggered, and not cancelled, in the SpCell; and | | |
| | 1> if UL-SCH resources are available for a new transmission in the SpCell and these UL-SCH resources can accommodate the LBT failure MAC CE plus its subheader as a result of logical channel prioritization: | | |
| | | 2> instruct the Multiplexing and Assembly procedure to generate the LBT failure MAC CE. | |
| | 1> else if consistent LBT failure has been triggered, and not cancelled, in at least one SCell: | | |
| | | 2> if UL-SCH resources are available for a new transmission in a Serving Cell for which consistent LBT failure has not been triggered and these UL-SCH resources can accommodate the LBT failure MAC CE plus its subheader as a result of logical channel prioritization: | |
| | | | 3> instruct the Multiplexing and Assembly procedure to generate the LBT failure MAC CE. |
| | | 2> else **if NES mode is not activated:** | |
| | | | 3> trigger a Scheduling Request for LBT failure MAC CE. |
| | 1> if a MAC PDU is transmitted and LBT failure indication is not received from lower layers and this PDU includes the LBT failure MAC CE: | | |
| | | 2> cancel all the triggered consistent LBT failure(s) in SCell(s) for which consistent LBT failure was indicated in the transmitted LBT failure MAC CE. | |
| | 1> if consistent LBT failure is triggered and not cancelled in the SpCell; and | | |
| | 1> if the Random Access procedure is considered successfully completed (see clause 5.1) in the SpCell: | | |
| | | 2> cancel all the triggered consistent LBT failure(s) in the SpCell. | |
| | 1> if *Ibt-FailureRecoveryConfig* is reconfigured by upper layers for a Serving Cell: | | |
| | | 2> cancel all the triggered consistent LBT failure(s) in this Serving Cell. | |

According to this embodiment, when the network is in a network energy saving mode, an SR for consistent LBT failure recovery is not triggered. Thereby a pending SR may be avoided from triggering a random access procedure, thus reducing network energy consumption.

In the above embodiments, in some implementations, if simultaneous use of IAB/Positioning/NTN and network energy saving is supported, the above scheduling request may further be an IAB-related SR and/or s Positoning-related SR and/or an NTN-related SR.

For example, when a parent node of an IAB-node or an IAB-donor is in a network energy saving mode, an SR is not triggered.

The following table shows possible behaviors of the MAC entity in this example:

| | | | |
|---|---|---|---|
| The MAC entity shall: | | | |
| | 1> if the Pre-emptive Buffer Status reporting procedure determines that at least one Pre-emptive BSR has been triggered and not cancelled: | | |
| | | 2> if UL-SCH resources are available for a new transmission and the UL-SCH resources can accommodate the Extended Pre-emptive BSR or Pre-emptive BSR MAC CE plus its subheader as a result of logical channel prioritization: | |
| | | | 3> instruct the Multiplexing and Assembly procedure to generate the Extended Pre-emptive BSR or Pre-emptive BSR MAC CE as defined in clause 6.1.3.1. |
| | | 2> else **if NES mode is not activated:** | |
| | | | 3> trigger a Scheduling Request. |

For another example, for a positioning measurement gap activation/deactivation request MAC CE, when the network is in a network energy saving mode, an SR is not triggered.

The following table shows possible behaviors of the MAC entity in this example:

| | | | |
|---|---|---|---|
| The MAC entity shall, | | | |
| | 1>if Positioning Measurement Gap Activation/Deactivation Request MAC CE has been triggered, and not cancelled: | | |
| | | 2> if indication from upper layer has been received that the triggered Positioning Measurement Gap Activation/Deactivation Request MAC CE should be cancelled; or | |
| | | 2> if the pre-configured measurement gap indicated in the Positioning Measurement Gap Activation/Deactivation Request MAC CE has already been activated/deactivated according to clause 5.18.20: | |
| | | | 3> cancel the triggered Positioning Measurement Gap Activation/Deactivation Request MAC CE. |
| | | 2> if UL-SCH resources are available for a new transmission and these UL-SCH resources can accommodate the Positioning Measurement Gap Activation/Deactivation Request MAC CE plus its subheader as a result of logical channel prioritization: | |
| | | | 3> instruct the Multiplexing and Assembly procedure to generate the Positioning Measurement Gap Activation/Deactivation Request MAC CE according to the upper layer's request; |
| | | | 3> cancel triggered Positioning Measurement Gap Activation/Deactivation Request MAC CE. |
| | | 2> else **if NES mode is not activated:** | |
| | | | 3> trigger a Scheduling Request for Positioning Measurement Gap Activation/Deactivation Request MAC CE. |

For another example, in the NTN, in order to provide a UE timing advance value i.e., *T*_{TA} for a gNB, Timing Advance reporting procedure is used, and when the network is in a network energy saving mode, an SR is not triggered.

The following table shows possible behaviors of the MAC entity in this example:

| | | | | |
|---|---|---|---|---|
| The MAC entity shall: | | | | |
| | 1> if the Timing Advance reporting procedure determines that at least one TAR has been triggered and not cancelled: | | | |
| | | 2> if UL-SCH resources are available for a new transmission and the UL-SCH resources can accommodate the Timing Advance Report MAC CE plus its subheader as a result of logical channel prioritization: | | |
| | | | 3> instruct the Multiplexing and Assembly procedure to generate the Timing Advance Report MAC CE as defined in clause 6.1.3.56. | |
| | | 2> else | | |
| | | | 3> **if NES mode is not activated;** and | |
| | | | 3> if *timingAdvanceSR* is configured with value *enabled:* | |
| | | | | 4> trigger a Scheduling Request. |

According to this embodiment, when the network node is an IAB-node or IAB-donor, or the network is an NTN, or the network is used for positioning, and when the network is in network energy saving mode, an SR is not triggered. Thereby a pending SR may be avoided from triggering a random access procedure, thus reducing network energy consumption.

In the above embodiments, in some other implementations, an IAB or NTN does not support network energy saving, Positioning and network energy saving are not configured simultaneously, not triggering a scheduling request may be that not configuring the IAB and/or not configuring Positioning and/or not configuring the NTN.

In some embodiments, the behavior related to the network energy saving mode includes at least one of the following:
canceling the pending scheduling request (SR);
considering that there exists no valid PUCCH resource configured for the pending SR;
considering that SR transmission is low-priority SR transmission;
pending an SR counter;
not initiating a random access procedure;
not performing clearing and/or releasing operation(s); and
using a larger maximum value of number of SR transmissions *(sr-TransMax).*

In the above embodiments, for "considering that SR transmission is low-priority SR transmission", for example, if the network is in a network energy saving mode, it is considered that SR transmission is low-priority SR transmission; for another example, if the network is not in a network energy saving mode, it is considered that SR transmission is high-priority SR transmission.

The following table shows one possibility of protocol modification according to the above embodiments:

| | | | | |
|---|---|---|---|---|
| | 1> else, for the SR configuration corresponding to the pending SR: | | | |
| | | 2> when the MAC entity has an SR transmission occasion on the valid PUCCH resource for SR configured; and | | |
| | 2> if *sr-ProhibitTimer* is not running at the time of the SR transmission occasion; and | | | |
| | 2> if the PUCCH resource for the SR transmission occasion does not overlap with a measurement gap; and | | | |
| | **2> if the NES mode is not activated:** | | | |
| | | 3> if ..: | | |
| | | | 4> consider the SR transmission as a prioritized SR transmission. | |
| | | | 4> ... | |
| | | | 4> if *SR_COUNTER < sr-TransMax:* | |
| | | | | 5> instruct the physical layer to signal the SR on one valid PUCCH resource for SR; |
| | | | | 5> ... |
| | | | 4> else: | |
| | | 3> else: | | |
| | | | 4> consider the SR transmission as a de-prioritized SR transmission. | |

The following table shows another possibility of protocol modification according to the above embodiments:

| | | | | | |
|---|---|---|---|---|---|
| | 1> else, for the SR configuration corresponding to the pending SR: | | | | |
| | | 2> when the MAC entity has an SR transmission occasion on the valid PUCCH resource for SR configured; and | | | |
| | | 2> if *sr-ProhibitTimer* is not running at the time of the SR transmission occasion; and | | | |
| | | 2> if the PUCCH resource for the SR transmission occasion does not overlap with a measurement gap: | | | |
| | | | 3> if ..; and | | |
| | | | **3> if the NES mode is not activated:** | | |
| | | | | 4> consider the SR transmission as a prioritized SR transmission. | |
| | | | | 4> ... | |
| | | | | 4> if *SR_COUNTER < sr-TransMax:* | |
| | | | | | 5> instruct the physical layer to signal the SR on one valid PUCCH resource for SR; |
| | | | | | 5> ... |
| | | | | 4> else:... | |
| | | | 3> else: | | |
| | | | | 4> consider the SR transmission as a de-prioritized SR transmission. | |

In the above embodiments, for "pending an SR counter", for example, if the network is in a network energy saving mode, an SR counter is pended; for another example, if the network is not in a network energy saving mode, the SR counter is incremented by 1.

The following table shows one possibility of protocol modification according to the above embodiments:

| | | | | | |
|---|---|---|---|---|---|
| | 1> else, for the SR configuration corresponding to the pending SR: | | | | |
| | | 2> when the MAC entity has an SR transmission occasion on the valid PUCCH resource for SR configured; and | | | |
| | 2> if *sr-ProhibitTimer* is not running at the time of the SR transmission occasion; and | | | | |
| | 2> if the PUCCH resource for the SR transmission occasion does not overlap with a measurement gap: | | | | |
| | | 3> if ..: | | | |
| | | | 4>... | | |
| | | | 4> if *SR_COUNTER < sr-TransMax:* | | |
| | | | | 5> instruct the physical layer to signal the SR on one valid PUCCH resource for SR; | |
| | | | | 5> if LBT failure indication is not received from lower layers; and | |
| | | | | **5> if the NES mode is not activated:** | |
| | | | | | 6> increment *SR*_*COUNTER* by 1; |
| | | | | | 6> start the *sr-ProhibitTimer.* |
| | | | | 5> ... | |

In the above embodiments, for "not initiating a random access procedure", for example, if the network is in a network energy saving mode, a random access procedure is not initiated or a triggered random access procedure is not initiated; for another example, if the network is not in a network energy saving mode, a random access procedure is initiated or a triggered random access procedure is initiated.

The following table shows one possibility of protocol modification according to the above embodiments:

| | | | | |
|---|---|---|---|---|
| | 4> if *SR_COUNTER < sr-TransMax:* | | | |
| | | 5> instruct the physical layer to signal the SR on one valid PUCCH resource for SR; | | |
| | | 5> if LBT failure indication is not received from lower layers: | | |
| | | | 6> increment *SR_COUNTER* by 1; | |
| | | | 6> start the *sr-ProhibitTimer.* | |
| | | 5> else if *lbt-FailureRecoveryConfig* is not configured: | | |
| | | | 6> increment *SR_COUNTER* by 1. | |
| | 4> else: | | | |
| | | **5> if the NES mode is not activated** | | |
| | | | | 6> notify RRC to release PUCCH for all Serving Cells; |
| | | | | 6> notify RRC to release SRS for all Serving Cells; |
| | | | | 6> clear any configured downlink assignments and uplink grants; |
| | | | | 6> clear any PUSCH resources for semi-persistent CSI reporting; |
| | | | | 6> initiate a Random Access procedure (see clause 5.1) on the SpCell and cancel all pending SRs. |

In the above embodiments, for "using a larger maximum value of the number of SR transmissions *(sr-TransMax)",* for example, the maximum value of the number of SR transmissions is configured to be an infinite value; for another example, when the maximum value of the number of SR transmissions is not configured, the terminal equipment considers that the maximum value of the number of SR transmissions is an infinite value.

The following table shows one possibility of protocol modification according to the above embodiments:

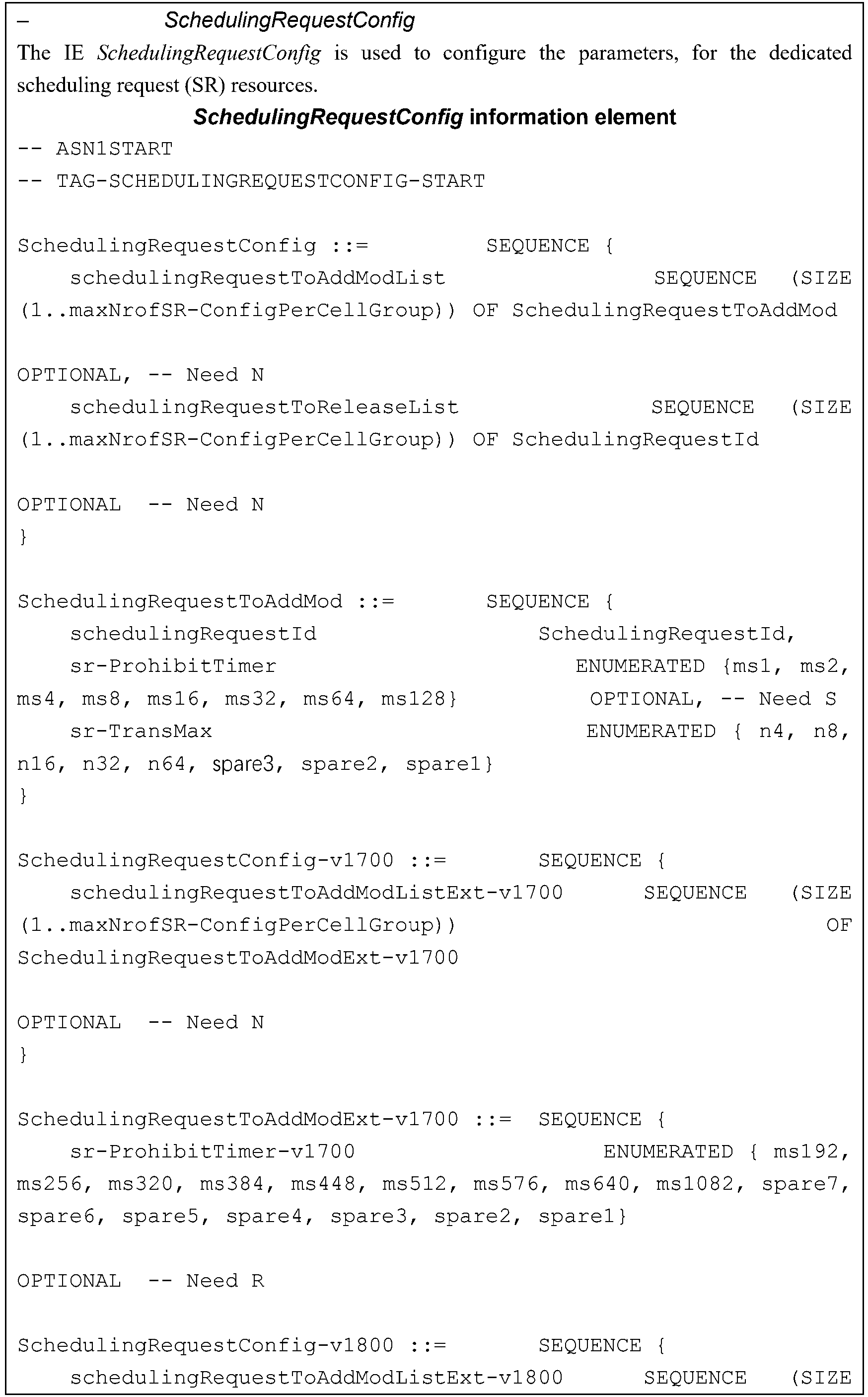

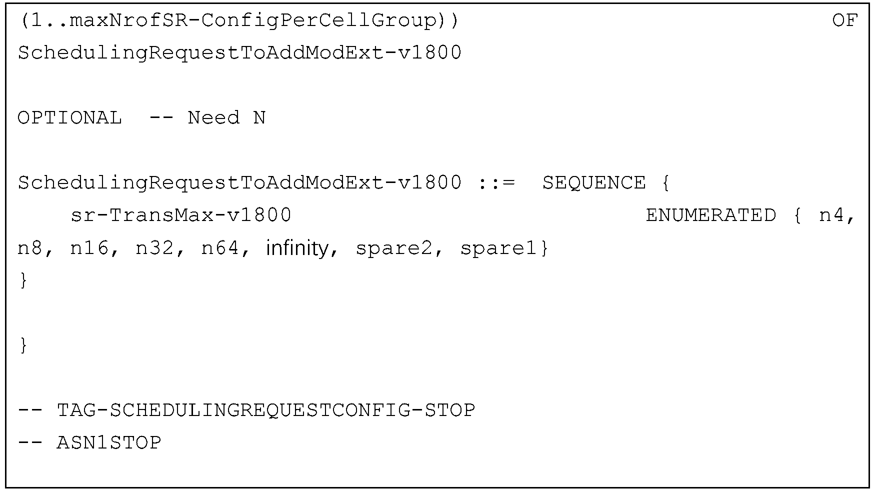

The following table shows another possibility of protocol modification according to the above embodiments:

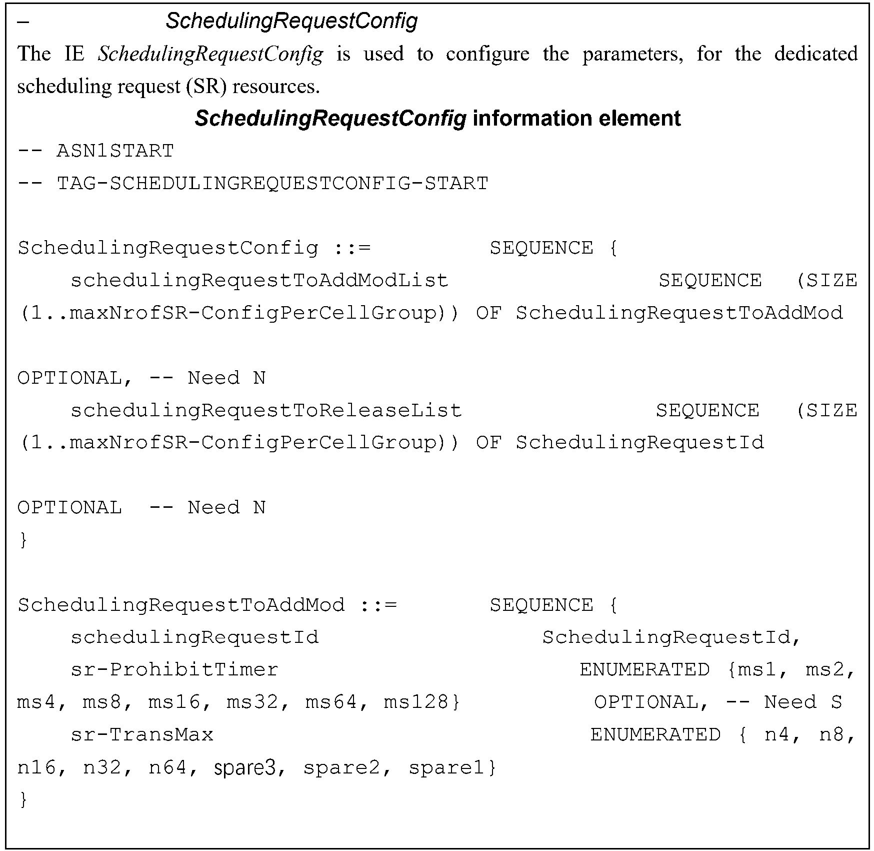

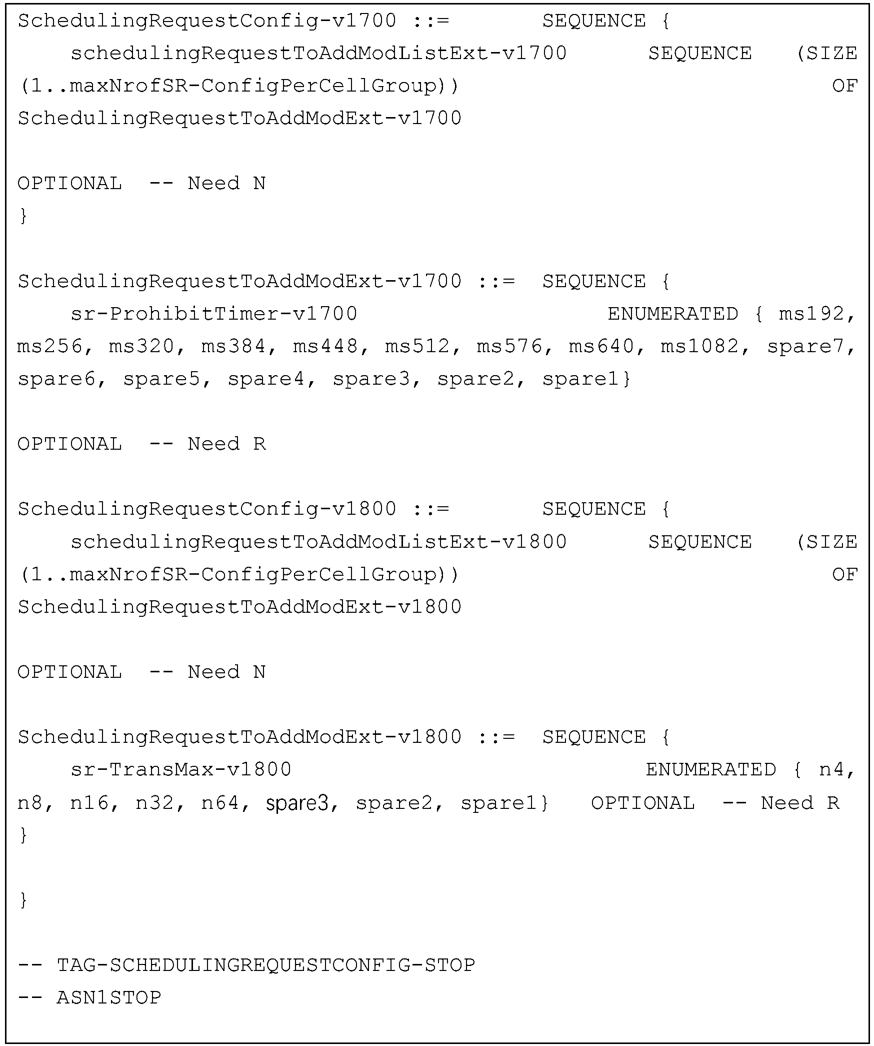

In the above example, the protocol description of *"sr-TransMax"* may be:

| |
|---|
| ***sr-TransMax*** |
| Maximum number of SR transmissions as described in TS 38.321 [3]. Value *n4* corresponds to 4, value n8 corresponds to 8, and so on. **If the field is absent, the UE applies the value infinity.** |

In the above embodiments, for "not performing clearing and/or releasing operations", for example, if the network is in a network energy saving mode, clearing and/or releasing operations are not performed; for another example, if the network is not in a network energy saving mode, clearing and/or releasing operations are performed.

In the above embodiments, if the network is not in a network energy saving mode, "performing clearing and/or releasing operations", which e.g. may include performing clearing and/or releasing operations if the network is not in a network energy saving mode and if an SR counter reaches a maximum value.

In the above embodiments, if the network is not in a network energy saving mode, "performing clearing and/or releasing operations", which may further include initiating a random access procedure on a special cell; and/or, canceling all pending SRs.

In each of the above embodiments, the operation of "clearing" includes: clearing any configured downlink assignments and uplink grants; and/or, clearing any PUSCH resource for a semi-persistent CSI report.

In each of the above embodiments, the operation of "releasing" includes: notifying RRC to release PUCCHs for all serving cells; and/or, notifying RRC to release SRS for all serving cells.

For example, if the SR counter reaches a maximum value and if the network is not in network energy saving mode, notifying the RRC to release PUCCHs for all serving cells, notifying the RRC to release SRS for all serving cells, clearing any configured downlink assignments and uplink grants, clearing any PUSCH resource for a semi-persistent CSI report, initiating a random access procedure on a special cell and canceling all pending SRs.

For another example, if the SR counter reaches the maximum value and the network is in a network energy saving mode, initiating a random access procedure on a special cell and canceling all pending SRs.

For another example, if the SR counter reaches the maximum value, initiating a random access procedure on a special cell and canceling all pending SRs. If the network is not in network energy saving mode, notifying the RRC to release PUCCHs for all serving cells, notifying the RRC to release SRS for all serving cells, clearing any configured downlink assignments and uplink grants, and clearing any PUSCH resource for a semi-persistent CSI report.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the above embodiments, when the network is in a network energy saving mode, the terminal equipment does not trigger an SR, thereby a pending SR can be avoided from triggering a random access procedure, thus reducing network energy consumption. On the other hand, when the network is in a network energy saving mode, for the pending SR, the terminal equipment performs behaviors related to the network energy saving mode, thereby the pending SR will not make a terminal to release uplink configuration.

### Embodiments of a second aspect

Embodiments of the present disclosure provide a communication method in cell discontinuous transmission/reception scenarios, which will be described from a network device side. The contents same as those in the embodiments of the first aspect are not repeated again.

FIG. 5 is a schematic diagram of a communication method in the embodiments of the present disclosure. As shown in FIG. 5, the method includes:
501: a network device indicates information on network energy saving to a terminal equipment.

According to the above embodiment, a network device indicates information on network energy saving to a terminal equipment, thereby the terminal equipment does not trigger an SR when a network is in a network energy saving mode, or performs behaviors related to the network energy saving mode for a pending SR, thereby avoiding the pending SR from triggering a random access procedure, thereby reducing network energy consumption, or, the pending SR will not make a terminal to release uplink configuration.

In some embodiments, a network device indicates information on network energy saving to a terminal equipment, which may be for example that the network device indicates the terminal equipment that it is in a network energy saving mode. The present disclosure does not impose any restrictions on a specific indication method, such as indicating by transmitting indication information, or by transmitting configuration information, or via other means. Moreover, the present disclosure does not impose any restrictions on a mode of carrying indication information or configuration information, which may be carried in various possible pieces of signaling.

In the above embodiments, the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

For example, when the network energy saving mode is "the network energy saving (NES) mode is activated", the network device may further indicate the terminal equipment to activate the network energy saving mode via at least one of RRC signaling, MAC CE signaling and DCI signaling (502).

For another example, when the network energy saving mode is "cell discontinuous transmission/reception (cell DTX/DRX) is configured and/or activated", the network device may further configure parameters for the cell discontinuous transmission/reception via RRC signaling (503).

For another example, when the network energy saving mode is "cell discontinuous transmission/reception (cell DTX/DRX) is configured and/or activated", the network device may further indicate activation of at least one cell DTX/DRX of a terminal equipment via at least one of RRC signaling, MAC CE signaling and DCI signaling (504).

For another example, when the network energy saving mode is "a terminal equipment is in an inactive state of cell discontinuous transmission/reception (cell DTX/DRX)", the network device may further transmit cell DTX/DRX configuration to the terminal equipment (505), thereby according to the cell DTX/DRX configuration, the terminal equipment may enter dormant or inactive time, or the terminal equipment is not in an on-duration time of cell DTX/DRX; or, when cell DTX/DRX is activated, the terminal equipment enters dormant or inactive time, or the terminal equipment is not in an on-duration time of cell DTX/DRX.

In each of the above embodiments, the RRC signaling may be broadcast signaling or dedicated signaling.

In some embodiments, that a network device indicates information on network energy saving to a terminal equipment, may be for example that the network device coordinates SR configuration and cell DTX/DRX on-duration time.

In the above embodiments, that the network device coordinates SR configuration and cell DTX/DRX on-duration time, may be for example that the cell DTX/DRX inactive time does not have a valid PUCCH resource; for another example that a valid PUCCH resource is in the cell DTX/DRX active time.

In some embodiments, that a network device indicates information on network energy saving to a terminal equipment, may be for example that if the network device supports one of IAB, NTN and positioning, the network device does not indicate that it is in a network energy saving mode, or the network device is in a network energy saving mode.

In the above embodiments, the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

The network energy saving mode has been described in the embodiments of the first aspect, its contents are incorporated here and are not repeated here.

In some embodiments, when the network device indicates that it is in a network energy saving mode, the network device does not support one of IAB, NTN and positioning.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the above embodiments, when the network is in a network energy saving mode, the terminal equipment does not trigger an SR, thereby a pending SR can be avoided from triggering a random access procedure, thus reducing network energy consumption. On the other hand, when the network is in a network energy saving mode, for the pending SR, the terminal equipment performs behaviors related to the network energy saving mode, thereby the pending SR will not make a terminal to release uplink configuration.

### Embodiments of a third aspect

Embodiments of the present disclosure provide a communication apparatus. The apparatus may, for example, be a terminal equipment, or may be one or more parts or components configured in the terminal equipment. The communication apparatus in the embodiments of the present disclosure corresponds to the method in the embodiments of the first aspect, the contents same as those in the embodiments of the first aspect are not repeated.

FIG. 6 is a schematic diagram of a communication apparatus in the embodiments of the present disclosure. As shown in FIG. 6, the communication apparatus 600 in the embodiments of the present disclosure comprises:
a processing unit 601 configured to, when a network is in a network energy saving mode, not to trigger a scheduling request and/or perform behaviors related to the network energy saving mode for a pending scheduling request.

In some embodiments, the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

In the above embodiments, that the network energy saving (NES) mode is activated, may include for example:
that a network device indicates the terminal equipment to activate the network energy saving mode via at least one of RRC signaling, MAC CE signaling and DCI signaling.

In the above embodiments, that the cell discontinuous transmission/reception is configured and/or activated, may include for example:
that the network device configures parameters for the cell discontinuous transmission/reception via RRC signaling.

In the above embodiments, that the cell discontinuous transmission/reception is configured and/or activated, may include for example:
that the network device indicates activation of at least one cell discontinuous transmission/reception of the terminal equipment via at least one of RRC signaling, MAC CE signaling and DCI signaling.

In the above embodiments, that the terminal equipment is in an inactive state of cell discontinuous transmission/reception, may include for example:
according to cell discontinuous transmission/reception configuration, the terminal equipment enters a dormant or inactive time, or the terminal equipment is not within a duration of the cell discontinuous transmission/reception; or,
according to cell discontinuous transmission/reception configuration, when the cell discontinuous transmission/reception is activated, the terminal equipment enters a dormant or inactive time, or the terminal equipment is not within a duration of the cell discontinuous transmission/reception.

In each of the above embodiments, the RRC signaling may be broadcast signaling or dedicated signaling.

In some embodiments, the scheduling request includes at least one of the following:
a scheduling request for buffer status report (BSR);
a scheduling request for beam failure recovery (BFR);
a scheduling request for consistent LBT failure recovery;
a scheduling request related to integrated access and backhaul (IAB);
a scheduling request related to positioning; and
a scheduling request related to a non-terrestrial network (NTN).

In the above embodiments, in some implementations, if simultaneous use with network energy saving is supported, the scheduling request includes one of the scheduling request related to IAB, the scheduling request related to positioning and the scheduling request related to NTN.

In the above embodiments, in some implementations, that the processing unit 601 does not trigger a scheduling requests comprises:
that the processing unit 601 does not configure one of IAB, NTN and positioning.

In some embodiments, that the processing unit 601 performs the behavior related to the network energy saving mode comprises:
the processing unit 601 cancels a pending scheduling request (SR);
the processing unit 601 considers that there exists no valid PUCCH resource configured for a pending SR;
the processing unit 601 considers that SR transmission is low-priority SR transmission;
the processing unit 601 pends an SR counter;
the processing unit 601 does not initiate a random access procedure;
the processing unit 601 does not perform clearing and/or releasing operation(s); and
that the processing unit 601 uses a larger maximum value of the number of SR transmissions *(sr-TransMax).*

In the above embodiments, that the processing unit 601 considers that SR transmission is low-priority SR transmission, for example, may include:
if the network is in a network energy saving mode, the processing unit 601 considers that SR transmission is low-priority SR transmission; or
if the network is not in a network energy saving mode, the processing unit 601 considers that SR transmission is high-priority SR transmission.

In the above embodiments, that the processing unit 601 pends an SR counter, for example, may include:
if the network is in a network energy saving mode, the processing unit 601 pends an SR counter; or
if the network is not in a network energy saving mode, the processing unit 601 increments the SR counter by 1.

In the above embodiments, that the processing unit 601 does not initiate a random access procedure, for example, may include:
if the network is in a network energy saving mode, the processing unit 601 does not initiate a random access procedure or does not initiate a triggered random access procedure; or
if the network is not in a network energy saving mode, the processing unit 601 initiates a random access procedure or initiates a triggered random access procedure.

In the above embodiments, that the processing unit 601 uses a larger maximum value of the number of SR transmissions, for example, may include:
the processing unit 601 configures the maximum value of the number of SR transmissions to an infinite value;
when the maximum value of the number of SR transmissions is not configured, the processing unit 601 considers that the maximum value of the number of SR transmissions is an infinite value.

In the above embodiments, that the processing unit 601 does not perform clearing and/or releasing operation(s), for example, may include:
if the network is in a network energy saving mode, the processing unit 601 does not perform clearing and/or releasing operation(s); and
if the network is not in a network energy saving mode, the processing unit 601 performs clearing and/or releasing operation(s).

In the above embodiments, that if the network is not in a network energy saving mode, the processing unit 601 performs clearing and/or releasing operation(s), for example, may include:
if the network is not in a network energy saving mode, and if an SR counter reaches a maximum value, the processing unit 601 performs clearing and/or releasing operation(s).

In the above embodiments, that if the network is not in a network energy saving mode, the processing unit 601 performs clearing and/or releasing operation(s), for example, may further include:
the processing unit 601 initiates a random access procedure on a special cell; and/or
the processing unit 601 cancels all pending SRs.

In each of the above embodiments, clearing may include for example:
clearing any configured downlink assignments and uplink grants; and/or
clearing any PUSCH resource for semi-persistent CSI reporting.

In each of the above embodiments, releasing may include for example:
notifying RRC to release PUCCHs for all serving cells; and/or,
notifying RRC to release SRSs for all serving cells.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

Embodiments of the present disclosure further provide a communication apparatus. The apparatus may, for example, be a network device, or may be one or more parts or components configured in the network device. The communication apparatus in the embodiments of the present disclosure corresponds to the method in the embodiments of the second aspect, the contents same as those in the embodiments of the second aspect are not repeated.

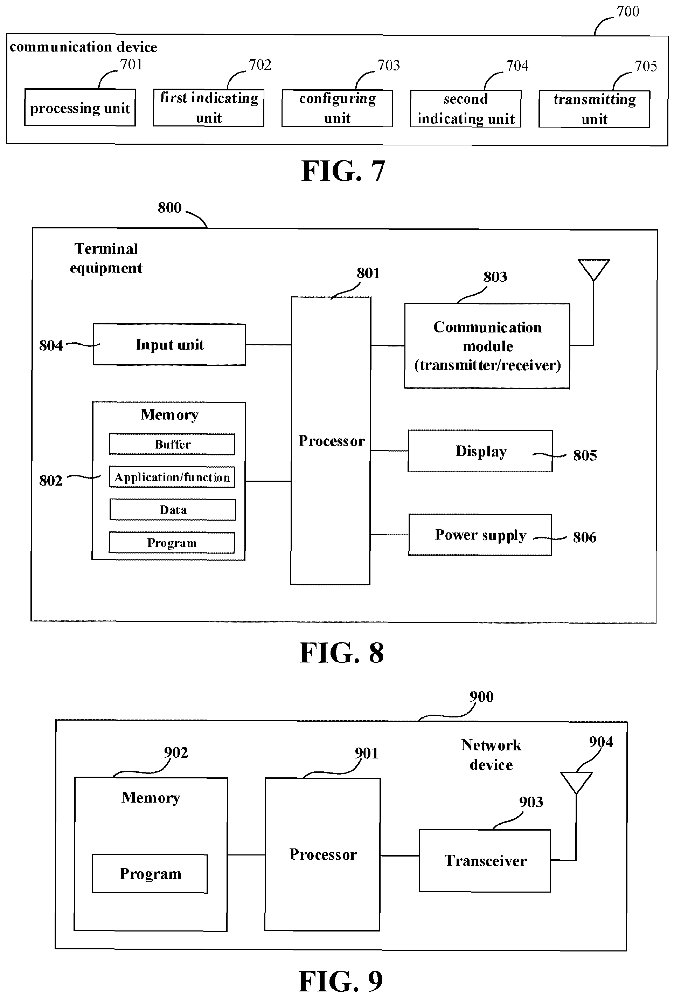

FIG. 7 is a schematic diagram of a communication apparatus in the embodiments of the present disclosure. As shown in FIG. 7, the communication apparatus 700 in the embodiments of the present disclosure comprises:
a processing unit 701 configured to indicate information on network energy saving to a terminal equipment.

In some embodiments, that a processing unit 701 indicates information on network energy saving to a terminal equipment includes:
the processing unit 701 indicates that a network is in a network energy saving mode to the terminal equipment.

In the above embodiments, in some implementations, the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

In some embodiments, as shown in FIG. 7, the apparatus 700 may further comprise:
a first indicating unit 702, configured to indicate the terminal equipment to activate the network energy saving mode via at least one of RRC signaling, MAC CE signaling and DCI signaling.

In the above embodiments, the network energy saving mode refers to: the network energy saving (NES) mode is activated.

In some embodiments, as shown in FIG. 7, the apparatus 700 may further comprise:
a configuring unit 703, configured to configure parameters for the cell discontinuous transmission/reception via RRC signaling.

In the above embodiments, the network energy saving mode refers to: cell discontinuous transmission/reception (cell DTX/DRX) is configured and/or activated.

In some embodiments, as shown in FIG. 7, the apparatus 700 may further comprise:
a second indicating unit 704, configured to indicate activation of at least one cell discontinuous transmission/reception of the terminal equipment via at least one of RRC signaling, MAC CE signaling and DCI signaling.

In the above embodiments, the network energy saving mode refers to: cell discontinuous transmission/reception (cell DTX/DRX) is configured and/or activated.

In some embodiments, as shown in FIG. 7, the apparatus 700 may further comprise:
a transmitting unit 705, configured to transmit cell DTX/DRX configuration to the terminal equipment, thereby according to the cell DTX/DRX configuration, the terminal equipment may enter dormant or inactive time, or the terminal equipment is not in an on-duration time of the cell DTX/DRX; or, when cell DTX/DRX is activated, the terminal equipment enters dormant or inactive time, or the terminal equipment is not in an on-duration time of the cell DTX/DRX.

In the above embodiments, the network energy saving mode refers to: a terminal equipment is in an inactive state of cell discontinuous transmission/reception.

In each of the above embodiments, the RRC signaling may be broadcast signaling or dedicated signaling.

In some embodiments, that the processing unit 701 indicates information on network energy saving to a terminal equipment includes:
the processing unit 701 coordinates SR configuration and cell discontinuous transmission/reception on-duration time (cell DTX/DRX on-duration time).

In the above embodiments, that the processing unit 701 coordinates SR configuration and cell discontinuous transmission/reception on-duration time includes:
the processing unit 701 makes the cell discontinuous transmission/reception inactive time to have no valid PUCCH resource; or
the processing unit 701 makes a valid PUCCH resource to be within a cell discontinuous transmission/reception active time.

In some embodiments, that the processing unit 701 indicates information on network energy saving to a terminal equipment includes:
if the network device supports one of IAB, NTN and positioning, the processing unit 701 does not indicate that a network is in a network energy saving mode, or the processing unit 701 considers that the network is in a network energy saving mode.

In the above embodiments, the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

In the embodiments of the present disclosure, when the processing unit 701 indicates that the network is in a network energy saving mode, the network device does not support one of IAB, NTN and positioning.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. Communication apparatus 600 or 700 may further comprise other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the apparatus in the above embodiments, when the network is in a network energy saving mode, the terminal equipment does not trigger an SR, thereby a pending SR can be avoided from triggering a random access procedure, thus reducing network energy consumption. On the other hand, when the network is in a network energy saving mode, for the pending SR, the terminal equipment performs behaviors related to the network energy saving mode, thereby the pending SR will not make a terminal to release uplink configuration.

### Embodiments of a fourth aspect

Embodiments of the present disclosure further provide a communication system, comprising a network device and a terminal equipment.

In some embodiments, the terminal equipment comprises the apparatus shown in FIG. 6 in the embodiments of the third aspect, configured to perform the method in the embodiments of the first aspect. Since each method has been described in details in the embodiments of the first aspect, its contents are incorporated here and are not repeated.

In some embodiments, the network device comprises the apparatus shown in FIG. 7 in the embodiments of the third aspect, configured to perform the method in the embodiments of the second aspect. Since each method has been described in details in the embodiments of the second aspect, its contents are incorporated here and are not repeated.

Embodiments of the present disclosure further provide a terminal equipment, the terminal equipment for example may be a UE, but the present disclosure is not limited to this, it may also be other terminal equipment.

FIG. 8 is a schematic diagram of a terminal equipment in the embodiments of the present disclosure. As shown in FIG. 8, the terminal equipment 800 may comprise a processor 801 and a memory 802; the memory 802 stores data and programs, and is coupled to the processor 801. It's worth noting that this figure is exemplary; other types of structures may also be used to supplement or replace this structure, so as to realize a telecommunication function or other functions.

In some embodiments, functions of the apparatus in FIG. 6 in the embodiments of the third aspect may be integrated into the processor 801, wherein the processor 801 may be configured to execute a program to implement the method as described in the embodiments of the first aspect, the contents of which are incorporated herein and are not described repeatedly here.

In some other embodiments, the apparatus in FIG. 6 in the embodiments of the third aspect may be configured separately from the processor 801, for example the apparatus in FIG. 6 in the embodiments of the third aspect may be configured as a chip connected to the processor 801, functions of the apparatus in FIG. 6 in the embodiments of the third aspect are realized under the control of the processor 801.

As shown in FIG. 8, the terminal equipment 800 may further comprise: a communication module 803, an input unit 804, a display 805 and a power supply 806. The functions of said components are similar to related arts, which are not repeated here. It's worth noting that the terminal equipment 800 does not have to include all the components shown in FIG. 8, said components are not indispensable. Moreover, the terminal equipment 800 may also include components not shown in FIG. 8, relevant technologies can be referred to.

Embodiments of the present disclosure further provide a network device, the network device for example may be a base station, but the present disclosure is not limited to this, it may also be other network device.

FIG. 9 is a composition schematic diagram of a network device in the embodiments of the present disclosure. As shown in FIG. 9, the network device 900 may comprise: a processor 901 and a memory 902; the memory 902 is coupled to the processor 901. The memory 902 may store various data; moreover, also stores a program for information processing, and executes the program under the control of the processor 901.

In some embodiments, functions of the apparatus 700 in FIG. 7 in the embodiments of the third aspect may be integrated into the processor 901, wherein the processor 901 may be configured to execute a program to implement the method as described in the embodiments of the second aspect, the contents of which are incorporated herein and are not described repeatedly here.

In some other embodiments, the apparatus 700 in FIG. 7 in the embodiments of the third aspect may be configured separately from the processor 901, for example the apparatus 700 in FIG. 7 in the embodiments of the third aspect may be configured as a chip connected to the processor 901, functions of the apparatus 700 in FIG. 7 in the embodiments of the third aspect are realized under the control of the processor 901.

In addition, as shown in FIG. 9, the network device 900 may further comprise: transceivers 903 and 904. The functions of said components are similar to related arts, which are not repeated here. It's worth noting that the network device 900 does not have to include all the components shown in FIG. 9. Moreover, the network device 900 may further comprise components not shown in FIG. 9, relevant technologies may be referred to.

Embodiments of the present disclosure further provide a computer program, wherein when a terminal equipment executes the program, the program enables the terminal equipment to execute the method described in the embodiments of the first aspect.

Embodiments of the present disclosure further provide a storage medium in which a computer program is stored, wherein the computer program enables a terminal equipment to execute the method described in the embodiments of the first aspect.

Embodiments of the present disclosure further provide a computer program, wherein when a network device executes the program, the program enables the network device to execute the method described in the embodiments of the second aspect.

Embodiments of the present disclosure further provide a storage medium in which a computer program is stored, wherein the computer program enables a network device to execute the method described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:
1. A communication method, wherein the method comprises:
   when a network is in a network energy saving mode, a terminal equipment does not trigger a scheduling request (SR) and/or perform behaviors related to the network energy saving mode for a pending scheduling request (pending SR).
2. The method according to Supplement 1, wherein the network energy saving mode refers to at least one of the following that:
   the network energy saving (NES) mode is activated;
   cell discontinuous transmission/reception (cell DTX/DRX) is configured and/or activated; and
   a terminal equipment is in an inactive state of cell discontinuous transmission/reception (cell DTX/DRX).
3. The method according to Supplement 2, that the network energy saving (NES) mode is activated comprises:
   a network device indicates the terminal equipment to activate the network energy saving mode via at least one of RRC signaling, MAC CE signaling and DCI signaling.
4. The method according to Supplement 2, wherein that the cell discontinuous transmission/reception is configured and/or activated comprises:
   the network device configures parameters for the cell discontinuous transmission/reception via RRC signaling.
5. The method according to Supplement 2, wherein that the cell discontinuous transmission/reception is configured and/or activated comprises:
   the network device indicates activation of at least one cell discontinuous transmission/reception of the terminal equipment via at least one of RRC signaling, MAC CE signaling and DCI signaling.
6. The method according to Supplement 2, wherein that the terminal equipment is in an inactive state of cell discontinuous transmission/reception comprises:
   according to cell discontinuous transmission/reception configuration, the terminal equipment enters a dormant or inactive time, or the terminal equipment is not within a duration of the cell discontinuous transmission/reception; or,
   according to cell discontinuous transmission/reception configuration, when the cell discontinuous transmission/reception is activated, the terminal equipment enters a dormant or inactive time, or the terminal equipment is not within a duration of the cell discontinuous transmission/reception.
7. The method according to Supplement 3, 4 or 5, wherein,
   the RRC signaling is broadcast signaling or dedicated signaling.
8. The method according to Supplement 1, wherein the scheduling request includes at least one of the following:
   a scheduling request for buffer status report (BSR);
   a scheduling request for beam failure recovery (BFR);
   a scheduling request for consistent LBT failure recovery;
   a scheduling request related to integrated access and backhaul (IAB);
   a scheduling request related to positioning; and
   a scheduling request related to a non-terrestrial network (NTN).
9. The method according to Supplement 8, wherein,
   if simultaneous use with network energy saving is supported, the scheduling request includes one of the scheduling request related to IAB, the scheduling request related to positioning and the scheduling request related to NTN.
10. The method according to Supplement 1, wherein the not triggering a scheduling request comprises:
   not configuring one of IAB, NTN and positioning.
11. The method according to Supplement 1, wherein the behavior related to the network energy saving mode includes:
   canceling the pending scheduling request (SR);
   considering that there exists no valid PUCCH resource configured for the pending SR;
   considering that SR transmission is low-priority SR transmission;
   pending an SR counter;
   not initiating a random access procedure;
   not performing clearing and/or releasing operation(s); and
   using a larger maximum value of number of SR transmissions *(sr-TransMax).*
12. The method according to Supplement 11, wherein the considering that SR transmission is low-priority SR transmission comprises:
   if the network is in a network energy saving mode, considering that SR transmission is low-priority SR transmission; or
   if the network is not in a network energy saving mode, considering that SR transmission is high-priority SR transmission.
13. The method according to Supplement 11, wherein the pending an SR counter comprises:
   if the network is in a network energy saving mode, pending an SR counter; or
   if the network is not in a network energy saving mode, incrementing the SR counter by 1.
14. The method according to Supplement 11, wherein the not initiating a random access procedure comprises:
   if the network is in a network energy saving mode, not initiating a random access procedure or not initiating a triggered random access procedure; or
   if the network is not in a network energy saving mode, initiating a random access procedure or initiating a triggered random access procedure.
15. The method according to Supplement 11, wherein the using a larger maximum value of the number of SR transmissions comprises:
   configuring the maximum value of the number of SR transmissions to an infinite value;
   when the maximum value of the number of SR transmissions is not configured, considering by the terminal equipment that the maximum value of the number of SR transmissions is an infinite value.
16. The method according to Supplement 11, wherein the not performing clearing and/or releasing operation(s) comprises:
   if the network is in a network energy saving mode, not performing clearing and/or releasing operation(s); and
   if the network is not in a network energy saving mode, performing clearing and/or releasing operation(s).
17. The method according to Supplement 16, wherein if the network is not in a network energy saving mode, the performing clearing and/or releasing operation(s) comprises:
   if the network is not in a network energy saving mode, and if an SR counter reaches a maximum value, performing clearing and/or releasing operation(s).
18. The method according to Supplement 17, wherein if the network is not in a network energy saving mode, the performing clearing and/or releasing operation(s) further comprises:
   initiating a random access procedure on a special cell; and/or
   canceling all pending SRs.
19. The method according to any one of Supplements 11 to 18, wherein the clearing comprises:
   clearing any configured downlink assignments and uplink grants; and/or
   clearing any PUSCH resource for semi-persistent CSI reporting.
20. The method according to any one of Supplements 11 to 18, wherein the releasing comprises:
   notifying RRC to release PUCCHs for all serving cells; and/or,
   notifying RRC to release SRSs for all serving cells.
21. A communication method, wherein the method comprises:
   a network device indicates information on network energy saving to a terminal equipment.
22. The method according to Supplement 21, wherein that the network device indicates information on network energy saving to a terminal equipment comprises:
   indicating that it is in a network energy saving mode by the network device to the terminal equipment.
23. The method according to Supplement 22, wherein a network energy saving mode refers to at least one of the following that:
   the network energy saving (NES) mode is activated;
   cell discontinuous transmission/reception (cell DTX/DRX) is configured and/or activated; and
   a terminal equipment is in an inactive state of cell discontinuous transmission/reception (cell DTX/DRX).
24. The method according to Supplement 23, wherein the network energy saving (NES) mode is activated, the method further comprises:
   the network device indicates the terminal equipment to activate the network energy saving mode via at least one of RRC signaling, MAC CE signaling and DCI signaling.
25. The method according to Supplement 23, wherein cell discontinuous transmission/reception (cell DTX/DRX) is configured and/or activated, the method further comprises:
   the network device configures parameters for the cell discontinuous transmission/reception via RRC signaling.
26. The method according to Supplement 23, wherein cell discontinuous transmission/reception (cell DTX/DRX) is configured and/or activated, the method further comprises:
   the network device indicates activation of at least one cell discontinuous transmission/reception of the terminal equipment via at least one of RRC signaling, MAC CE signaling and DCI signaling.
27. The method according to Supplement 22, wherein the terminal equipment is in an inactive state of cell discontinuous transmission/reception, the method further comprises:
   the network device transmits cell DTX/DRX configuration to the terminal equipment, and according to the cell DTX/DRX configuration, the terminal equipment enters dormant or inactive time, or the terminal equipment is not in an on-duration time of the cell DTX/DRX; or, when cell DTX/DRX is activated, the terminal equipment enters dormant or inactive time, or the terminal equipment is not in an on-duration time of the cell DTX/DRX.
28. The method according to Supplement 24, 25 or 26, wherein,
   the RRC signaling is broadcast signaling or dedicated signaling.
29. The method according to Supplement 21, wherein that the network device indicates information on network energy saving to a terminal equipment comprises:
   coordinating SR configuration and cell discontinuous transmission/reception on-duration time (cell DTX/DRX on-duration time) by the network device.
30. The method according to Supplement 29, wherein the coordinating SR configuration and cell discontinuous transmission/reception on-duration time comprises:
   making the cell discontinuous transmission/reception inactive time to have no valid PUCCH resource; or
   making a valid PUCCH resource to be within a cell discontinuous transmission/reception active time.
31. The method according to Supplement 21, wherein that the network device indicates information on network energy saving to a terminal equipment comprises:
   if the network device supports one of IAB, NTN and positioning, not indicating by the network device that it is in a network energy saving mode, or the network device is in a network energy saving mode.
32. The method according to Supplement 31, wherein the network energy saving mode refers to at least one of the following that:
   the network energy saving (NES) mode is activated;
   cell discontinuous transmission/reception (cell DTX/DRX) is configured and/or activated; and
   a terminal equipment is in an inactive state of cell discontinuous transmission/reception (cell DTX/DRX).
33. The method according to any one of Supplements 22-28, wherein,
   when the network device indicates that it is in a network energy saving mode, the network device does not support one of IAB, NTN and positioning.
34. A terminal equipment, comprising a memory and a processor, the memory storing a computer program, and the processor being configured to execute the computer program to implement the method according to any one of Supplements 1 to 20.
35. A network device, comprising a memory and a processor, the memory storing a computer program, and the processor being configured to execute the computer program to implement the method according to any one of Supplements 21 to 33.
36. A communication system, comprising the terminal equipment according to Supplement 34 and the network device according to Supplement 35.

## Claims

1. A communication apparatus, configured in a terminal equipment, wherein the apparatus comprises:
a processing unit configured to, when a network is in a network energy saving mode, not to trigger a scheduling request (SR) and/or perform behaviors related to the network energy saving mode for a pending scheduling request (SR).

2. The apparatus according to claim 1, wherein the network energy saving mode refers to at least one of the following:
the network energy saving (NES) mode is activated;
cell discontinuous transmission/reception (cell DTX/DRX) is configured and/or activated; and
a terminal equipment is in an inactive state of cell discontinuous transmission/reception (cell DTX/DRX).

3. The apparatus according to claim 2, wherein that the network energy saving mode is activated comprises:
a network device indicates the terminal equipment to activate the network energy saving mode via at least one of RRC signaling, MAC CE signaling and DCI signaling.

4. The apparatus according to claim 2, wherein that the cell discontinuous transmission/reception is configured and/or activated comprises:
a network device configures parameters for the cell discontinuous transmission/reception via RRC signaling.

5. The apparatus according to claim 2, wherein that the cell discontinuous transmission/reception is configured and/or activated comprises:
a network device indicates activation of at least one cell discontinuous transmission/reception of the terminal equipment via at least one of RRC signaling, MAC CE signaling and DCI signaling.

6. The apparatus according to claim 2, wherein that the terminal equipment is in an inactive state of cell discontinuous transmission/reception comprises that:
according to cell discontinuous transmission/reception configuration, the terminal equipment enters a dormant or inactive time, or the terminal equipment is not within a duration of the cell discontinuous transmission/reception; or,
according to cell discontinuous transmission/reception configuration, when the cell discontinuous transmission/reception is activated, the terminal equipment enters a dormant or inactive time, or the terminal equipment is not within a duration of the cell discontinuous transmission/reception.

7. The apparatus according to claim 1, wherein the scheduling request includes at least one of the following:
a scheduling request for buffer status report (BSR);
a scheduling request for beam failure recovery (BFR);
a scheduling request for consistent LBT failure recovery;
a scheduling request related to integrated access and backhaul (IAB);
a scheduling request related to positioning; and
a scheduling request related to a non-terrestrial network (NTN).

8. The apparatus according to claim 7, wherein,
if simultaneous use with network energy saving is supported, the scheduling request includes one of the scheduling request related to IAB, the scheduling request related to positioning and the scheduling request related to NTN.

9. The apparatus according to claim 1, wherein that the processing unit does not trigger a scheduling request comprises:
the processing unit does not configure one of IAB, NTN and positioning.

10. The apparatus according to claim 1, wherein the behaviors related to the network energy saving mode include:
canceling the pending scheduling request (SR);
considering that there exists no valid PUCCH resource configured for the pending SR;
considering that SR transmission is low-priority SR transmission;
pending an SR counter;
not initiating a random access procedure;
not performing clearing and/or releasing operation(s); and
using a larger maximum value of number of SR transmissions *(sr-TransMax).*

11. The apparatus according to claim 10, wherein if the network is not in a network energy saving mode, that the processing unit performs clearing and/or releasing operation(s) comprises:
initiating a random access procedure on a special cell; and/or
canceling all pending SRs.

12. A communication apparatus configured, in a network device, wherein the apparatus comprises:
a processing unit configured to indicate information on network energy saving to a terminal equipment.

13. The apparatus according to claim 12, wherein that the processing unit indicates information on network energy saving to a terminal equipment comprises:
indicating that it is in a network energy saving mode by the processing unit to the terminal equipment.

14. The apparatus according to claim 13, wherein the network energy saving mode refers to at least one of the following:
the network energy saving (NES) mode is activated;
cell discontinuous transmission/reception (cell DTX/DRX) is configured and/or activated; and
the terminal equipmentis in an inactive state of cell discontinuous transmission/reception (cell DTX/DRX).

15. The apparatus according to claim 12, wherein that the processing unit indicates information on network energy saving to a terminal equipment comprises:
coordinating SR configuration and cell discontinuous transmission/reception on-duration time (cell DTX/DRX on-duration time) by the processing unit.

16. The apparatus according to claim 15, wherein the coordinating SR configuration and cell discontinuous transmission/reception on-duration time by the processing unit comprises:
making the cell discontinuous transmission/reception inactive time to have no valid PUCCH resource by the processing unit; or
making a valid PUCCH resource to be within a cell discontinuous transmission/reception active time by the processing unit.

17. The apparatus according to claim 12, wherein that the processing unit indicates information on network energy saving to a terminal equipment comprises:
if the network device supports one of IAB, NTN and positioning, not indicating by the processing unit that it is in a network energy saving mode, or the network device is in a network energy saving mode.

18. The apparatus according to claim 17, wherein the network energy saving mode refers to at least one of the following:
the network energy saving (NES) mode is activated;
cell discontinuous transmission/reception (cell DTX/DRX) is configured and/or activated; and
the terminal equipment is in an inactive state of cell discontinuous transmission/reception (cell DTX/DRX).

19. The apparatus according to claim 13, wherein,
when the network device indicates that it is in a network energy saving mode, the network device does not support one of IAB, NTN and positioning.

20. A communication system, comprising a network device and a terminal equipment, wherein,
the terminal equipment is configured to:
when a network is in a network energy saving mode, not to trigger a scheduling request (SR) and/or perform behaviors related to the network energy saving mode for a pending scheduling request (SR); and/or,
the network device is configured to:
indicate information on network energy saving to the terminal equipment.
